# EUROPÄISCHE PATENTANMELDUNG

(11) **EP 1 624 288 A1**
(43) Veröffentlichungstag der Anmeldung: **08.02.2006**
(21) Anmeldenummer: 05015688.4
(22) Anmeldetag: 19.07.2005
(51) Int. Cl.: G01C 21/36

(54) **Navigationssystem mit sprachgesteuerter Angabe von Sonderzielen**

(30) Priorität: 04.08.2004 DE 102004037858
(71) Anmelder: Harman Becker Automotive Systems GmbH, 76307 Karlsbad (DE)
(72) Erfinder: Brülle-Drews, Christian, 22159 Hamburg (DE)
(74) Vertreter: Grünecker, Kinkeldey, Stockmair & Schwanhäusser Anwaltssozietät

(57) **Zusammenfassung**

Die Erfindung betrifft ein Navigationssystem für ein Fahrzeug, das Routenplanungs- und Routenführungsinformationen ausgibt. Das erfindungsgemäße Navigationssystem zeichnet sich dadurch aus, dass es ein Sprachbediensystem aufweist und mit Hilfe des Sprachbediensystems die Ausgabe von Sekundärinformationen veranlasst werden kann.

## Beschreibung

### Gebiet der Erfindung

Die vorliegende Erfindung betrifft ein Navigationssystem für ein Fahrzeug, das Routenplanungs- und Routenführungsinformationen ausgibt.

### Stand der Technik

Navigationssysteme gehören seit einigen Jahren standardmäßig zu dem Ausstattungsangebot für Fahrzeuge der gehobenen Klasse. Diese Systeme basieren üblicherweise auf dem Empfang von GPS (Global Positioning System) - Satellitenfunksignalen. Diese Funksignale werden von einer GPS - Antenne im Fahrzeug empfangen und einem Navigationsrechner in dem Fahrzeugs zur Verfügung gestellt. Dieser verarbeitet die empfangenen Daten und des Weiteren Daten, die mit Hilfe von Bewegungssensoren, wie Radsensoren und Gyroskopen, gewonnen werden und bestimmt so die aktuelle Position des Fahrzeugs.

Das Navigationssystem zeigt dem Fahrer typischerweise auf einer digitalen Karte die jeweilige aktuelle Position des Fahrzeugs an und erlaubt die Routenplanung und Routenführung von der gegenwärtigen Position zu einem gewünschten Navigationsziel. Hierbei wird unter Verwendung einer Datenbank eine Routenliste erzeugt. Unter Verwendung dieser Liste und in Verbindung mit der Ortung des Fahrzeugs über das GPS werden Fahranweisungen generiert. Ein Benutzer wird durch Bildschirmanzeigen und/oder akustische Zielführungsanweisungen über die Route und die Richtungsänderungen informiert. Während der Fahrt ist ein Richtungswechsel möglich: Das System berechnet die Route sofort neu und übermittelt neue Fahranweisungen.

In der Phase der Routenplanung kann die Route durch die Angabe von Sonderzielen aus bestimmten Sonderzielkategorien bestimmt werden. Unter solchen Sonderzielkategorien sind Sammelbegriffe für Sonderziele als mögliche Navigationsziele zu verstehen. Typischerweise stehen diese Sammelbegriffe für Gebäudekomplexe wie beispielsweise Tankstellen, KFZ-Werkstätten. Bahnhöfe, Flughäfen, Häfen, Hotels, Parkhäuser, Schulen, kulturelle Einrichtungen, die der Benutzer mit Hilfe des Navigationssystems anzufahren gedenkt. Von besonderer Wichtigkeit sind Ziele, die in einem Notfall gesucht werden, wie Polizeistationen und Krankenhäuser. Ebenso können auch Sammelbegriffe für landschaftliche Zielpunkte, wie besondere Aussichtspunkte, Sonderzielkategorien darstellen.

In der Phase der Routenplanung wird von dem Benutzer nach Wahl einer Sonderzielkategorie ein bestimmtes Sonderziel, also nach Wahl der entsprechenden Sonderzielkategorie beispielsweise ein bestimmtes Hotel, aus einer Liste über eine Tastatur eingegeben, oder nach Wahl der Kartendarstellung mit Hilfe eines Cursors markiert und dadurch ausgewählt.

In der Phase der Routenführung, also während der Fahrt, wird die Route typischerweise auf einer Karte dargestellt. Bestimmte Informationen, im weiteren Primärinformationen genannt, werden immer mit Hilfe der Bildschirmdarstellung dargestellt. Solche Primärinformationen umfassen die befahrene Route, Manöverpunkte und das Straßennetz.

Da die Möglichkeiten der Bildschirmanzeige prinzipiell beschränkt sind, muss der Benutzer für die Bereitstellung zusätzlicher optionaler Informationen, in der vorliegenden Anmeldung im weiteren Sekundärinformationen genannt, eine Vorauswahl treffen. Solche Sekundärinformationen umfassen beispielsweise Umgebungsinformationen wie Sonderziele und die Topographie.

In der Phase der Routenführung lassen sich herkömmlich lediglich Ausschnitt und Maßstab der Karte verändem; die Auswahl der gezeigten Sekundärinformationen und insbesondere der Sonderziele ist üblicherweise während der Fahrt unveränderbar. Eine manuelle Änderung der Auswahl der gezeigten Sekundärinformationen würde die Aufmerksamkeit des Fahrers untolerierbar ablenken und somit ein Sicherheitsrisiko darstellen.

Es kann jedoch auch in der Phase der Routenführung für den Fahrer sehr wünschenswert sein, eine freie Wahl der anzuzeigenden Sonderzielkategorien und Sonderziele zu behalten. So kann es beispielsweise erforderlich sein, Informationen über Parkhäuser in der Umgebung eines vorab gewählten Sonderziels, z.B. eines Theaters, zu erhalten, oder etwa bei Bedarf die Positionen von Tankstellen oder Werkstätten angezeigt zu bekommen.

Ein weiteres Beispiel für den sich ändemden Bedarf an Sekundärinformationen betrifft die Routenänderung infolge von Verkehrsstaus. Über das Autoradio können aktuelle Staüinformationen in digitalisierter Form empfangen und in das Navigationssystem eingespeist werden. So können Navigationssysteme Staus auf Autobahnen in die Routenplanung einbeziehen und während der Fahrt auf Grund von Staumeldungen Alternativen anbieten. Akzeptiert der Benutzer eine altemative Routenführung wird er unter Umständen andere Sonderzielkategorien als zu Beginn der Fahrt angezeigt bekommen wollen.

Auch können unvorhergesehen andere Sekundärinformationen als Sonderziele in der Phase der Routenführung wichtig werden; man denke hier beispielsweise an den Bedarf an topografischen Informationen über Höhenlagen und Steigungen des winters in Gebirgen.

Der vorliegenden Erfindung liegt demnach die Aufgabe zu Grunde, ein komfortables und sicheres Navigationssystem zur Verfügung zu stellen, dass die freie Wahl verschiedener Sekundärinformationen in der Phase der Routenführung, also während der Fahrt, erlaubt.

### Beschreibung

Die oben genannte Aufgabe wird gemäß Anspruch 1 gelöst durch ein Navigationssystem für ein Fahrzeug, das Routenplanungs- und Routenführungsinformationen ausgibt und dadurch gekennzeichnet ist, dass es ein Sprachbediensystem aufweist und mit Hilfe des Sprachbediensystems die Ausgabe von Sekundärinformationen veranlasst werden kann.

Nur eine Sprachbediensystem erlaubt dem Fahrer die komfortable und sichere Abfrage von Sekundärinformationen während der Fahrt, sei es dass diese Informationen akustisch oder grafisch zur Verfügung gestellt werden.

Gemäß einer vorteilhaften erfindungsgemäßen Weiterbildung zeigt das Navigationssystem Routenplanungs- und Routenführungsinformationen in einer Kartendarstellung auf einem Bildschirm grafisch an und ist dadurch gekennzeichnet ist, dass es ein Sprachbediensystem aufweist, mit Hilfe dessen Sekundärinformationen in Form einer Darstellung von Symbolen in der Kartendarstellung ein- oder ausgeblendet werden können.

Nur eine Sprachbediensystem erlaubt dem Fahrer das Ändem der Wahl der angezeigten Sekundärinformationen - also solcher Informationen, die nicht immer, sondern optional angezeigt werden können - während der Fahrt ohne ein unvertretbares Sicherheitsrisiko, das eine manuelle Änderung der Einstellungen durch den Verlust an Aufmerksamkeit auf das Steuem des Fahrzeugs zwangsläufig mit sich bringen würde.

Ein Wechsel von der Grafik- auf die Textdarstellung ist nicht nötig. Zudem ist eine sprachgesteuerte Auswahl bedienerfreundlicher als ein menügesteuerte Auswahl. Insbesondere entfällt das unter Umständen lästige Blättem durch Untermenüs.

Gemäß einer vorteilhaften erfindungsgemäßen Weiterbildung umfassen die Sekundärinformationen Sonderziele aus einer oder mehreren Sonderzielkategorien, insbesondere Polizeistelle und/oder Krankenhäuser und/oder Feuerwachen und/oder Tankstellen und/oder Werkstätten und/oder Parkhäuser und/oder Hotels und/oder Bahnhöfe und/oder Flughäfen und/oder Häfen und/oder Schulen und/oder kulturelle Einrichtungen. Sonderziele als mögliche Navigationsziele stellen im allgemeinen besonders wichtige Sekundärinformationen dar.

Gemäß einer erfindungsgemäßen Weiterbildung können mit Hilfe des Sprachbediensystems eine oder mehrere der Sonderzielkategorien ausgewählt werden. Somit können nachfolgend weitere Informationen zu individuellen Sonderzielen der ausgewählten einen oder mehreren Sonderzielkategorien abgefragt werden.

Gemäß einer bevorzugten erfindungsgemäßen Weiterbildung führt die Auswahl einer oder mehrerer Sonderzielkategorien zu der Angabe eines oder mehrerer Sonderziele, wird mit Hilfe des Sprachbediensystems mindestens eines der Sonderziele ausgewählt, und führt diese Auswahl dazu, dass das Navigationssystem weitere Informationen über das mindestens eine ausgewählte Sonderziel, insbesondere eine Routenplanung und/oder Routenführung zu dem mindestens einen ausgewählten Sonderziel, zur Verfügung stellt.

Diese Weiterbildung ist von besonderer praktischer Relevanz. Die so zur Verfügung gestellten Informationen sind im Alltag von großem Wert. Sie können prinzipiell akustisch oder/und mit Hilfe einer grafischen Darstellung auf einem Bildschirm zur Verfügung gestellt werden.

Gemäß einer weiteren erfindungsgemäßen Weiterbildung können mit Hilfe des Sprachbediensystems eine oder mehrere der Sonderzielkategorien ausgewählt werden und führt diese Auswahl zu der Anzeige von einem oder mehreren Symbolen in der Kartendarstellung, die für die ausgewählten eine oder mehreren Sonderzielkategorien charakteristisch sind und einzelne der Sonderziele darstellen.

Die Anzeige von Symbolen für Sonderziele nach Auswahl von Sonderzielkategorien ist im alltäglichen Gebrauch vor allem in Städten und Gemeinden von besonderer Wichtigkeit. Der Benutzer nennt also eine Sonderzielkategorie, z.B. Tankstellen, und daraufhin werden auf der digitalen Karte Symbole für einzelne Sonderziele der gewünschten Kategorie, z.B. einzelne Tankstellen, an den entsprechenden Orten eingeblendet.

In einer Weiterbildung der Erfindung sind die eingeblendeten Symbole für die unterschiedlichen Sonderziele unterschiedlich indiziert, kann mit Hilfe des Sprachbediensystems und der Indizes der eingeblendeten Symbole mindestens eines der Sonderziele ausgewählt werden und führt diese Auswahl dazu, dass das Navigationssystem weitere Informationen über das mindestens eine ausgewählte Sonderziel zur Verfügung stellt.

Eine solche Indizierung kann beispielsweise mit Hilfe von Zahlen auf oder in der Nähe der Symbole für die Sonderziele der gewählten Sonderzielkategorie erfolgen. Damit lassen sich Sonderziele derselben Sonderzielkategorie eindeutig unterscheiden und auswählen. Nach der Auswahl eines individuellen Sonderziels mit Hilfe des Sprachbediensystems, beispielsweise durch das Sprechen von "Nummer 1" kann der Benutzer weitere Informationen erhalten. So kann beispielsweise die Auswahl eines bestimmten Hotels ("Nummer 1 ") nach der vorausgegangenen Auswahl der Sonderzielkategorie "Hotels" zu der akustischen Information über Zimmerpreise führen.

In einer besonders bevorzugten Weiterbildung der Erfindung umfassen die von dem Navigationssystem nach der Auswahl des mit Hilfe des Sprachbediensystems und der Indizes der eingeblendeten Symbole mindestens einen Sonderziels zur Verfügung gestellten weiteren Informationen über das mindestens eine ausgewählte Sonderziel eine Routenplanung und/oder Routenführung zu dem mindestens einen ausgewählten.

Eine solche Weiterbildung erscheint als besonders tauglich für die Alltagspraxis. Eine solche durch die Erfindung ermöglichte Auswahl eines individuellen Sonderziels als Navigationsziel durch den Benutzer ist ohne Einschränkung der Sicherheit während der Fahrt möglich und zudem mit erhöhten Bedienungskomfort schneller als durch eine Cursorwahl auf einer digitalen Karte.

In einer Weiterbildung des Navigationssystem der vorliegenden Erfindung werden nach der Auswahl des mindestens einen Sonderziels die Symbole der nicht ausgewählten Sonderziele ausgeblendet. Diese Ausblendung nicht mehr benötigter Informationen erhöht den Komfort, ohne dass eine weitere Aktion des Benutzers erforderlich wäre.

In einer weiteren Weiterbildung der Erfindung wird durch die Auswahl eines Sonderziels dieses Sonderziel als ein Zwischenziel einer zuvor definierten Fahrroute gesetzt. Die Auswahl eines Sonderziels führt also insbesondere nicht notwendigerweise dazu, dass dieses Sonderziel das neue Endziel einer neuen und gegebenenfalls geänderten Routenführung darstellt.

In altemativen vorteilhaften Weiterbildungen der Erfindung erfolgt die Aktivierung des Sprachbediensystem über einen manuell zu bedienenden Schalter oder über einen sprachlichen Code. In der ersten Variante muss sich das System zwar permanent im 'stand by'-Modus befinden, ist aber dafür kein manuelle Handhabung vonnöten:

In einer weiteren vorteilhaften Weiterbildung der Erfindung wird das Sprachbediensystem wahlweise nach erfolgter Aktivierung und Eingabe einer der Sonderzielkategorien und/oder eines der Sonderziele automatisch wieder deaktiviert oder es verbleibt in Empfangsbereitschaft. Je nach Wunsch des Benutzers kann so eine zeitsparendere Benutzung oder eine solche, bei der versehentliches Ansprechen des Sprachbediensystems vermieden wird, gewählt werden.

In einer weiteren vorteilhaften Weiterbildung umfasst das erfindungsgemäße Navigationssystem zusätzlich eine Speichereinheit zum Speichem zumindest eines für die Benutzung des Sprachbediensystems gewünschten oder erforderlichen Benutzerprofils. Hierdurch lässt sich der Bedienkomfort weiter verbessem bzw. die Nutzung durch Unbefugte unterbinden.

Beispielhafte Ausführungsformen der vorliegende Erfindung, die eine grafische Darstellung auf einem Bildschirm aufweisen, werden nachfolgend anhand der Zeichnung näher erläutert.

Es zeigen:
- Figur 1: den Bedienungsablauf für ein erfindungsgemäßes Navigationssystems mit Sprachbediensystem, und
- Figur 2: ein praxisnahes Beispiel für eine Anwendung eines erfindungsgemäßen Navigationssystems mit Sprachbediensystem.

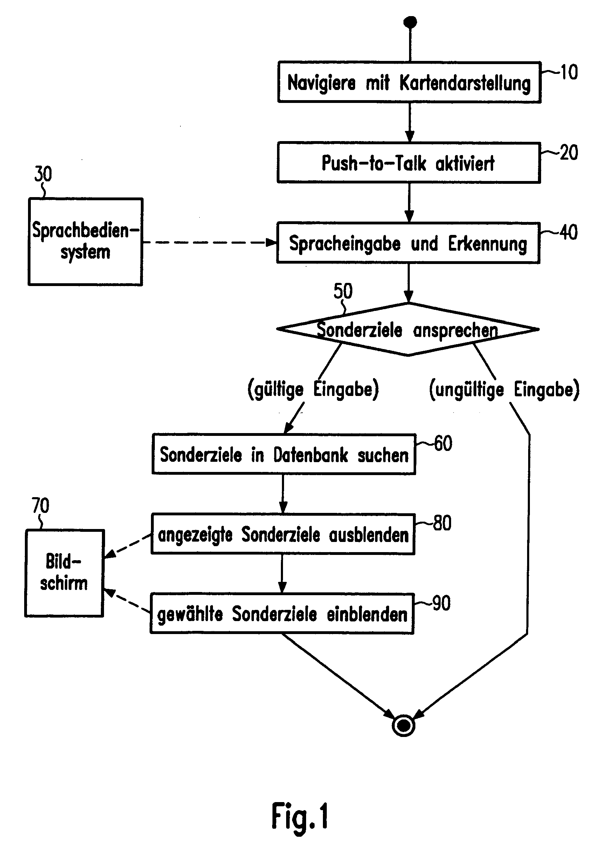

Wie in Figur 1 dargestellt navigiert der Fahrer während der Fahrt mit Hilfe der Kartendarstellung 10. Altemativ und zusätzlich kann er akustische Zielführungsanweisungen nutzen. Bei Bedarf an bisher nicht angezeigten Sekundärinformationen, wie insbesondere Sonderzielen, aktiviert er mit Hilfe eines Schalters (Push-To-Talk) 20 das Sprachbediensystem 30. Über die Spracheingabe 40 des Sprachbediensystems 30 werden Sonderziele 50 angesprochen. Nach diesen Sonderzielen wird im Fall einer gültigen Eingabe in einer Datenbank gesucht 60. Je nach altemativer Ausführungsform, werden bisher auf dem Bildschirm 70 des Navigationssystems angezeigte Sonderziele ausgeblendet 80 und werden neu ausgewählte Sonderziele 90 eingeblendet.

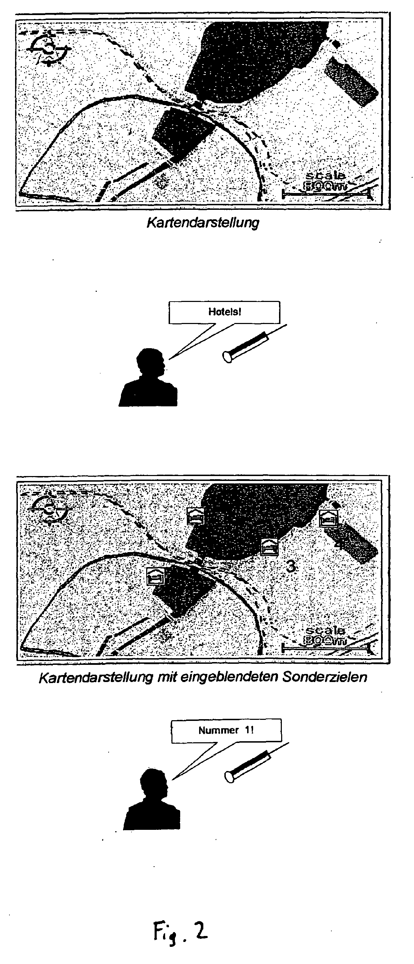

Figur 2 illustriert ein praxisnahes Beispiel für eine Anwendung einer vorteilhaften Ausführungsform der vorliegenden Erfindung. Ein Fahrer hat in der Phase der Routenplanung als Sonderziel ein Stadtzentrum (dunkel markiert) ausgewählt. In der Phase der Routenführung leitet ihn das Navigationssystem in das Stadtzentrum. Während dieser Zielführung ist die Kartendarstellung auf dem Bildschirm aktiviert. Der Fahrer wünscht nun Informationen über die Lage von Hotels zu erhalten. Die Anzeige dieser Sekundärinformationen wurde von ihm in der Phase der Routenplanung nicht gewählt. Er aktiviert, beispielsweise mit Hilfe eines "Push-to-Talks"- Hebels die Spracheingabe. Mit Hilfe dieser Spracheingabe wählt er durch Sprechen des Wortes "Hotels" die entsprechende Sonderzielkategorie aus. Das Navigationssystem zeigt daraufhin sämtliche in der Umgebung befindlichen gespeicherten Hotels mit Hilfe entsprechender Symbole grafisch in der Kartendarstellung an. In der hier erläuterten Ausführungsform sind diese Symbole durch Ziffem indiziert. Falls das System so konfiguriert ist, dass das Sprachbediensystem sich selbst nach einer erfolgten Auswahl wieder deaktiviert, betätigt der Fahrer wiederum den "Push-to-Talks"- Hebel, um ein gewünschtes Hotel als individuelles Sonderziel wählen zu können. Dies Auswahl erfolgt sodann durch Sprechen von "Nummer 1 ". Daraufhin erfolgt durch das System eine Routenführung durch Bildschirmanzeigen und/oder akustische Zielführungsanweisungen. Auf ähnliche Weise kann der Benutzer während der Fahrt ohne einen Wechsel der Bildschirmanzeige andere Sekundärinformationen ein- bzw. ausblenden.

## Patentansprüche

1. Navigationssystem für ein Fahrzeug, das Routenplanungs- und Routenführungsinformationen ausgibt und **dadurch gekennzeichnet ist, dass**
es ein Sprachbediensystem aufweist; und
mit Hilfe des Sprachbediensystems die Ausgabe von Sekundärinformationen veranlasst werden kann.

2. Navigationssystem nach Anspruch 1, wobei
die Routenplanungs- und Routenführungsinformationen in einer Kartendarstellung auf einem Bildschirm grafisch anzeigt werden; und
die Sekundärinformationen in Form einer Darstellung von Symbolen in der Kartendarstellung ein- oder ausgeblendet werden können.

3. Navigationssystem nach Anspruch 1 oder 2, wobei
die Sekundarinformationen Sonderziele aus einer oder mehreren Sonderzielkategorien, insbesondere Polizeistelle und/oder Krankenhäuser und/oder Feuerwachen und/oder Tankstellen und/oder Werkstätten und/oder Parkhäuser und/oder Hotels und/oder Bahnhöfe und/oder Flughäfen und/oder Häfen und/oder Schulen und/oder kulturelle Einrichtungen, umfassen.

4. Navigationssystem nach Anspruch 3, wobei
mit Hilfe des Sprachbediensystems eine oder mehrere der Sonderzielkategorien ausgewählt werden können.

5. Navigationssystem nach Anspruch 4, wobei
die Auswahl einer oder mehrerer Sonderzielkategorien zu der Angabe eines oder mehrerer Sonderziele führt; und
mit Hilfe des Sprachbediensystems mindestens eines der Sonderziele ausgewählt wird; und diese Auswahl dazu führt, dass
das Navigationssystem weitere Informationen über das mindestens eine ausgewählte Sonderziel, insbesondere eine Routenplanung und/oder Routenführung zu dem mindestens einen ausgewählten Sonderziel, zur Verfügung stellt.

6. Navigationssystem nach Anspruch 4 in Verbindung mit Anspruch 2, wobei
die Auswahl einer oder mehrerer Sonderzielkategorien zu der Einblendung von einem oder mehreren Symbolen in der Kartendarstellung, die für die ausgewählten eine oder mehreren Sonderzielkategorien charakteristisch sind und einzelne der Sonderziele darstellen, führt.

7. Navigationssystem nach Anspruch 6, wobei
die eingeblendeten Symbole für die unterschiedlichen Sonderziele unterschiedlich indiziert sind, und
mit Hilfe des Sprachbediensystems und der Indizes der eingeblendeten Symbole mindestens eines der Sonderziele ausgewählt wird; und diese Auswahl dazu führt, dass
das Navigationssystem weitere Informationen über das mindestens eine ausgewählte Sonderziel zur Verfügung stellt.

8. Navigationssystem nach Anspruch 7, wobei
die von dem Navigationssystem nach der Auswahl des mit Hilfe des Sprachbediensystems und der Indizes der eingeblendeten Symbole mindestens einen Sonderziels zur Verfügung gestellten weiteren Informationen über das mindestens eine ausgewählte Sonderziel
eine Routenplanung und/oder Routenführung zu dem mindestens einen ausgewählten Sonderziel umfassen.

9. Navigationssystem nach Anspruch 7 oder 8, wobei
nach der Auswahl des mindestens einen Sonderziels die Symbole der nicht ausgewählten Sonderziele ausgeblendet werden.

10. Navigationssystem nach einem der vorangegangenen Ansprüche, wobei
durch die Auswahl eines Sonderziels dieses Sonderziel als ein Zwischenziel einer zuvor definierten Fahrroute gesetzt wird.

11. Navigationssystem nach einem der vorangegangenen Ansprüche, wobei
die Aktivierung des Sprachbediensystems über einen manuell zu bedienenden Schalter oder über einen gesprochenen Code erfolgt.

12. Navigationssystem nach einem der vorangegangenen Ansprüche, wobei
das Sprachbediensystem wahlweise nach erfolgter Aktivierung und Eingabe einer der Sonderzielkategorien und/oder eines der Sonderziele automatisch wieder deaktiviert wird oder in Empfangsbereitschaft verbleibt.

13. Navigationssystem nach einem der vorangegangenen Ansprüche, weiterhin umfassend
eine Speichereinheit zum Speichem zumindest eines für die Benutzung des Sprachbediensystems gewünschten oder erforderlichen Benutzerprofils.
